# FASCICULE DE BREVET EUROPEEN

(11) **EP 1 113 188 B1**
(45) Date de publication et mention de la délivrance du brevet: **21.01.2004**
(21) Numéro de dépôt: 00403265.2
(22) Date de dépôt: 22.11.2000
(51) Int. Cl.: F16F 15/32

(54) **Masselotte d'équilibrage en particulier pour roue de véhicule**
Ausgleichsgewicht, insbesondere für Fahrzeugrad
Balancing weight, in particular for vehicle wheel

(30) Priorité: 31.12.1999 FR 9916806
(43) Date de publication de la demande: 04.07.2001
(73) Titulaire: Peugeot Citroen Automobiles, 92200 Neuilly Sur Seine (FR)
(72) Inventeur: Guinard, Gaelle, 92260 Fontenay aux Roses (FR); Engler, Bernard, 78570 Andresy (FR)
(74) Mandataire: Seytre, Françoise

(56) Documents cités:
- EP-A- 0 994 274
- DE-A- 3 118 222
- PATENT ABSTRACTS OF JAPAN vol. 2000, no. 08, 6 octobre 2000 (2000-10-06) & JP 2000 145894 A (HITACHI POWDERED METALS CO LTD), 26 mai 2000 (2000-05-26)
- PATENT ABSTRACTS OF JAPAN vol. 1997, no. 06, 30 juin 1997 (1997-06-30) & JP 09 049549 A (TOHO KOGYO KK), 18 février 1997 (1997-02-18)
- PATENT ABSTRACTS OF JAPAN vol. 1996, no. 10, 31 octobre 1996 (1996-10-31) & JP 08 144038 A (HITACHI POWDERED METALS CO LTD), 4 juin 1996 (1996-06-04)

## Description

La présente invention se rapporte aux masselottes utilisées pour réaliser l'équilibrage des roues, et en particulier des roues de véhicules automobiles.

Les masselottes d'équilibrage utilisées jusqu'à présents sont constitués d'un corps moulé en plomb et d'une pince élastique ou agrafe constituée par une lame d'acier à ressort qui est ancrée dans le corps (cf. DE-A-3 118 222).

Dans certains types de masselottes, la pince est amovible.

Dans tous les cas, l'ensemble de la masselotte avec sa pince détermine un poids dont la valeur est un chiffre rond, par exemple 15, 20, 25, ..., 50g, etc.

Dans le cadre de la protection de l'environnement, certaines directives pourraient interdire l'utilisation du plomb dans les véhicules, en accordant cependant quelques dérogations pour les batteries, le revêtement intérieur des réservoirs d'essence.

L'application de telles directives nécessite de concevoir un matériau de substitution au plomb de ces masselottes d'équilibrage.

On connaît déjà à cet effet, le principe d'injection de billes plastiques dans le pneu. Cependant, une telle solution s'avère coûteuse.

Une autre solution envisageable est la substitution du plomb par de l'étain. Toutefois, le coût de l'étain est nettement plus élevé que celui du plomb. De plus, l'étain est un métal noble pouvant dans une telle utilisation engendrer des dégradations et ou des vols des masselottes.

L'invention a pour but de remédier en partie à ces inconvénients.

Elle a pour objet à cet effet une masselotte d'équilibrage pour roue de véhicule, constitué d'un corps et d'une pince élastique réalisée à partir d'une lame d'acier à ressort, caractérisée en ce que le corps de la masselotte est réalisé dans un matériau fritté inoxydable, ce matériau étant constitué d'un alliage de fer et d'au moins 12% en poids de chrome.

Selon une autre caractéristique, le corps comporte, venue de frittage, une gorge longitudinale. Celle-ci présente de préférence une profondeur comprise entre 3 et 4 mm et une largeur d'environ 2 mm.

Selon encore une autre caractéristique, la pince est solidarisée à l'intérieur de la gorge par déformation locale des bords de la gorge dans le domaine plastique.

Un autre objet de l'invention concerne un procédé de réalisation d'une masselotte d' équilibrage pour roue de véhicule, constituée d'un corps et d'une pince élastique, caractérisé en ce qu'on réalise les étapes suivantes :
- on comprime entre deux poinçons un matériau fritté inoxydable constitué d'un alliage de fer et d'au moins 12 % en poids de chrome, l'un des poinçons étant pourvu d'une partie saillante présentant la forme d'un « V » dont l'extrémité jointive est tronquée afin de former une gorge dans le corps;
- on introduit la pince élastique réalisée à partir d'une lame d'acier à ressort à l'intérieur de ladite gorge ainsi qu'une plaquette de brasure sur au moins un côté de la pince au niveau de la gorge, et
- on chauffe cet ensemble à une température supérieure à 1100°C.

Les caractéristiques de l'invention mentionnées ci-dessus, ainsi que d'autres, apparaîtront plus clairement à la lecture de la description suivante d'un exemple de réalisation, en se référant aux dessins annexés sur lesquels :
- la figure 1 est une vue de face d'une masselotte suivant l'invention ;
- la figure 2 est une vue en coupe transversale de la masselotte suivant l'invention et de deux poinçons de mise en forme de ladite masselotte ; et
- les figures 3 à 6 illustrent un mode de réalisation de la solidarisation de la pince avec le corps de la masselotte.

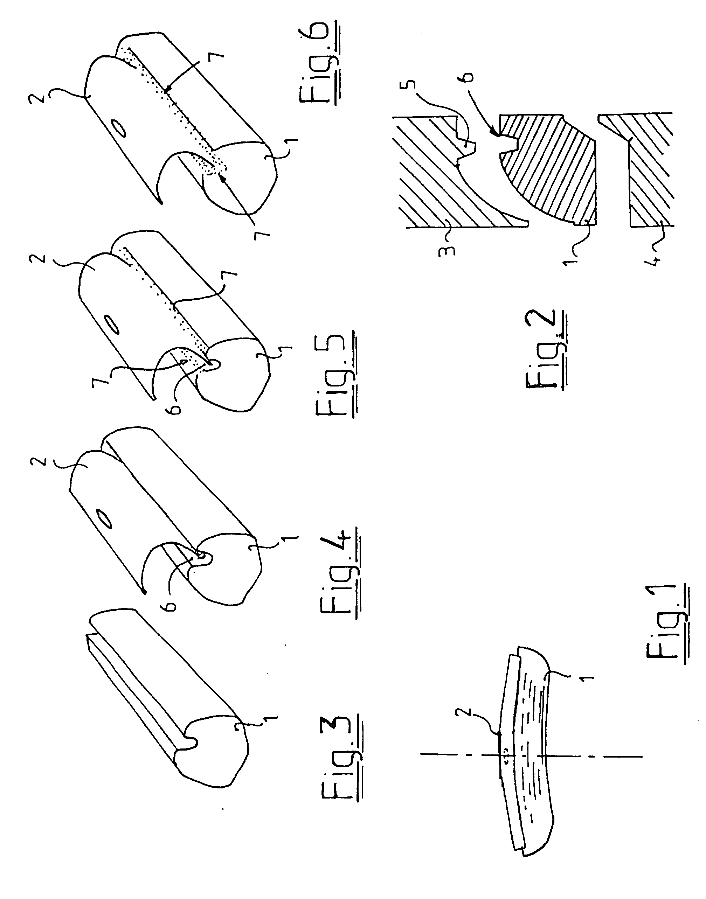

On a représenté aux figures 1 et 2, une masselotte d'équilibrage selon l'invention comprenant un corps 1 réalisé dans un matériau fritté inoxydable et une pince élastique 2 constituée d'une lame d'acier à ressort rendu solidaire du corps 1.

Le matériau fritté est avantageusement constitué d'un alliage de fer et d'au moins 12% en poids de chrome.

De manière classique, des éléments d'addition du type nickel, peuvent être associés à la composition du matériau dans des proportions réduites, ceci dans le but d'augmenter la densité du corps de la masselotte.

On comprend à la lecture de ce qui précède, qu'avantageusement la densité d'une telle masselotte peut être ajustée en fonction du pourcentage en poids du liant.

Le corps 1 de la masselotte est obtenu par compression du matériau fritté entre deux poinçons 3 et 4. L'un des poinçons d'une partie saillante 5 présentant la forme générale d'un « V » tronqué à son extrémité jointive destinée à réaliser une gorge longitudinale 6 dans le corps 1 de la masselotte.

Cette gorge 6 destinée à recevoir la pince 2 présente une profondeur comprise entre 3 et 4 mm et une largeur d'environ 2 mm.

Afin de solidariser la pince 2 au corps 1 de la masselotte d'équilibrage, une première solution consiste à déformer localement le corps 1 dans le domaine plastique au moyen d'un outil.

Une telle solution s'avère peu rentable dans une unité de fabrication industrielle.

Une seconde solution, représenté sur les figures 3 à 6, consiste à solidariser la pince 2 au corps 1 au moyen d'un brasage. A cet effet, le procédé de réalisation de la masselotte consiste à réaliser les étapes suivantes:
- on comprime entre deux poinçons 3 et 4, un matériau fritté, l'un 3 des poinçons étant pourvue d'une partie saillante 5 présentant la forme d'un « V » dont l'extrémité jointive est tronquée afin de former une gorge 6 dans le corps 1;
- on introduit une pince 2 à l'intérieur de ladite gorge 6 ainsi qu'une plaquette de brasure 7 sur au moins un côté de la pince 2 au niveau de la gorge 6, et
- on chauffe cet ensemble à une température supérieure à 1100°C, afin de réaliser l'opération de frittage. La brasure se liquéfie et remplit la gorge 6 du corps 1.

Lors du refroidissement de la masselotte d'équilibrage, la solidificatrion de la brasure permet un excellent accrochage de la pince 2 sur le corps 1.

Une telle masselotte d'équilibrage selon l'invention présente l'avantage d'être rapide à réaliser,simple et peu coûteuse.

## Revendications

1. Masselotte d'équilibrage pour roue de véhicule, constituée d'un corps (1) et d'une pince élastique (2) réalisée à partir d'une lame d'acier à ressort, **caractérisée en ce que** le corps de la masselotte est réalisé dans un matériau fritté inoxydable constitué d'un alliage de fer et d'au moins 12% en poids de chrome.

2. Masselotte selon la revendication 1, **caractérisée en ce que** le corps comporte, venue de frittage, une gorge (6) longitudinale.

3. Masselotte selon la revendication 2, **caractérisée en ce** la gorge (6) présente une profondeur comprise entre 3 et 4 mm et une largeur d'environ 2 mm.

4. Masselotte selon la revendication 2 ou 3, **caractérisée en ce que** la pince (2) est solidarisée à l'intérieur de la gorge par déformation locale des bords de la gorge dans le domaine plastique.

5. Procédé de réalisation d'une masselotte d'équilibrage pour roue de véhicule, constitué d'un corps (1) et d'une pince élastique (2), **caractérisé en ce qu'**on réalise les étapes suivantes :
- on comprime entre deux poinçons (3 ; 4) un matériau fritté inoxydable constitué d'un alliage de fer et d'au moins 12 % en poids de chrome, l'un des poinçons étant pourvu d'une partie saillante (5) présentant la forme d'un « V » dont l'extrémité jointive est tronquée afin de former une gorge (6) dans le corps (1);
- on introduit la pince élastique (2) réalisé à partir d'une lame d'acier à ressort à l'intérieur de ladite gorge ainsi qu'une plaquette de brasure (7) sur au moins un côté de la pince (2) au niveau de la gorge (6), et
- on chauffe cet ensemble à une température supérieure à 1100°C.

## Patentansprüche

1. Auswuchtungs-Ausgleichsgewicht für ein Fahrzeugrad, das aus einem Körper (1) und aus einer elastischen Klemme (2) besteht, die ausgehend von einer Stahlblattfeder hergestellt wird, **dadurch gekennzeichnet, dass** der Körper des Ausgleichsgewichts aus einem rostfreien Sintermaterial hergestellt wird, das aus einer Legierung von Eisen und mindestens 12 Gew.-% Chrom besteht.

2. Ausgleichsgewicht nach Anspruch 1, **dadurch gekennzeichnet, dass** der Körper eine beim Sintervorgang hergestellte Längskehle (6) aufweist.

3. Ausgleichsgewicht nach Anspruch 2, **dadurch gekennzeichnet, dass** die Kehle (6) eine Tiefe zwischen 3 und 4 mm und eine Breite von etwa 2 mm aufweist.

4. Ausgleichsgewicht nach Anspruch 2 oder 3, **dadurch gekennzeichnet, dass** die Klemme (2) innerhalb der Kehle durch örtliche Verformung der Ränder der Kehle im plastischen Bereich befestigt wird.

5. Verfahren zur Herstellung eines Auswuchtungs-Ausgleichsgewichts für ein Fahrzeugrad, das aus einem Körper (1) und einer elastischen Klemme (2) besteht, **dadurch gekennzeichnet, dass** die folgenden Schritte durchgeführt werden:
- zwischen zwei Stempeln (3; 4) wird ein rostfreies Sintermaterial komprimiert, das aus einer Legierung aus Eisen und mindestens 12 Gew.-% Chrom besteht, wobei einer der Stempel mit einem vorstehenden Bereich (5) versehen ist, der die Form eines "V" aufweist, wobei das die beiden Schenkel des V verbindende Ende abgestumpft ist, um im Körper (1) eine Kehle (6) zu bilden;
- die ausgehend von einer Stahlblattfeder gebildete elastische Klemme (2) wird ins Innere der Kehle eingeführt, und ein Lötgutplättchen (7) wird auf mindestens eine Seite der Klemme (2) in Höhe der Kehle (6) aufgebracht, und
- diese Einheit wird auf eine Temperatur von mehr als 1100°C erwärmt.

## Claims

1. Balancing weight for a vehicle wheel, constituted by a body (1) and a resilient clamp (2) produced from a spring steel blade, **characterised in that** the body of the weight is made from a stainless sintered material constituted by an alloy of iron and at least 12% chromium by weight.

2. Weight according to Claim 1, **characterised in that** the body comprises, after sintering, a longitudinal groove (6).

3. Weight according to Claim 2, **characterised in that** the groove (6) has a depth of between 3 and 4 mm and a width of approximately 2 mm.

4. Weight according to Claim 2 or 3, **characterised in that** the clamp (2) is fixed immovably inside the groove by local deformation of the edges of the groove within the plastic range.

5. Method for producing a balancing weight for a vehicle wheel, constituted by a body (1) and a resilient clamp (2), **characterised in that** the following steps are carried out:
□ a stainless sintered material constituted by an alloy of iron and at least 12% chromium by weight is compressed between two punches (3; 4), one of the punches being provided with a V-shaped projecting portion (5), the contiguous end of which is truncated so as to form a groove (6) in the body (1);
□ the resilient clamp (2) produced from a spring steel blade is introduced into said groove as well as a brazing plate (7) on at least one side of the clamp (2) in the groove (6), and
□ this assembly is heated at a temperature above 1100 °C.
